(19) Europäisches Patentamt

European Patent Office

Office européen des brevets

(11) **EP 0 625 716 B1**

## (12) EUROPEAN PATENT SPECIFICATION

(45) Date of publication and mention
of the grant of the patent:
**15.03.2000 Bulletin 2000/11**

(51) Int. Cl.⁷: **G01S 17/58**, G01S 17/50

(21) Application number: **94303527.9**

(22) Date of filing: **18.05.1994**

(54) **Monitoring systems to measure flight characteristics of moving sports object**

Überwachungssystem zur Messung des Flugverhaltens eines sich bewegenden Sportgerätes

Système de surveillance pour mesurer les caractéristiques de vol d'un objet de sport mouvant

(84) Designated Contracting States:
**DE FR GB SE**

(30) Priority: **18.05.1993 US 63611**

(43) Date of publication of application:
**23.11.1994 Bulletin 1994/47**

(73) Proprietor: **ACUSHNET COMPANY**
**Fairhaven, Massachusetts 02719 (US)**

(72) Inventors:
• **Gobush, William**
**North Dartmouth, MA 02747 (US)**

• **Days, Charles**
**South Dartmouth, MA 02748 (US)**
• **Pelletier, Diane**
**Fairhaven, MA 02719 (US)**

(74) Representative:
**Bridge-Butler, Alan James et al**
**G.F. Redfern & Co.,**
**7 Staple Inn,**
**Holborn**
**London WC1V 7QF (GB)**

(56) References cited:
**GB-A- 2 234 877**   **US-A- 4 545 576**
**US-A- 4 713 686**   **US-A- 5 111 410**

**Description**

Ball monitoring devices for using multiple electro-sensors to determine the angle of launch, spin rate and speed of sports objects are old (U.S. Patent No. 4,136,387 and 4,158,853).

EP 0 554 978 describes a sport object flight monitoring system including at least two shutterable camera units each of which receives light patterns from each and every one of a plurality of contrasting areas on the object in rapid successive sequence. A computer receives the signals generated by the light patterns as received by each camera unit to determine the object's flight characteristics. US Patent No. 4 136 387 also shows electro-optical sensors to measure the location of a plurality of spots on the surface of a golf club head or a golf ball at a minimum of two precisely spaced points in time. The two time points for the club head are just prior to impact with the golf ball. The two time points for the golf ball are just after impact by the club head. From the apparent displacements of the plurality of spots between the measurements the apparatus determines in substantially real time the velocity of the club head or ball and the spin about orthogonal axes.

Both the above systems employ two or more cameras or electro-optical sensors where each sensor or camera aims at only one contrasting area on a ball. Using multiple cameras or sensors to measure one dot requires that each camera or sensor is calibrated in relation to the other. This is difficult to achieve accurately and this affects the measurements. Moreover, using multiple cameras or sensors to measure one dot each also requires that each measurement for each camera or sensor is timed precisely with respect to the other. The measurement times are of the order of between thousandths and millionths of a second. As a result synchronising the cameras or sensors to measure at the same time is difficult to accomplish, and poor synchronisation of the camera's or sensor's measurement time will also adversely affect the results. When two cameras or sensors are used the physical characteristics of each camera, for example, the orientation of each lens, can vary the results. Since the measurements are of fractions of inches, any distortion due to the physical make-up of the system can increase the error in measurements undesirably.

The present invention is intended to overcome some of the difficulties referred to above by using a single camera.

Broadly, the present invention comprises a portable system for monitoring the initial flight of an object in which multiple reflective areas or contrasting areas are located on the object which areas emit light to one camera which receives a plurality of successive light patterns representing instances in the object's initial flight. The light patterns received by the camera are processed by computer which compares known calibration light patterns with the received signals from the object during flight to compute initial flight characteristics of the object.

It is a feature of the system the it is compact, automatic and portable and can be readily calibrated on site.

It is also a feature that the use of multiple reflective or contrasting areas on the object permits the camera to receive sufficient data despite initial object flight rotation.

Figure 1 is a perspective view of apparatus of the present invention position adjacent a teed golf ball;

Figure 2 is a perspective view of a three-dimensional field showing a golf ball passing through the field from position A to position B;

Figure 3 is a perspective view of a calibration fixture carrying twenty illuminable areas;

Figure 4 is a plan view of the light receiving and sensory grid panel located in the camera; and

Figure 5 is a schematic illustrating the trajectory of a ball hit by a driving machine.

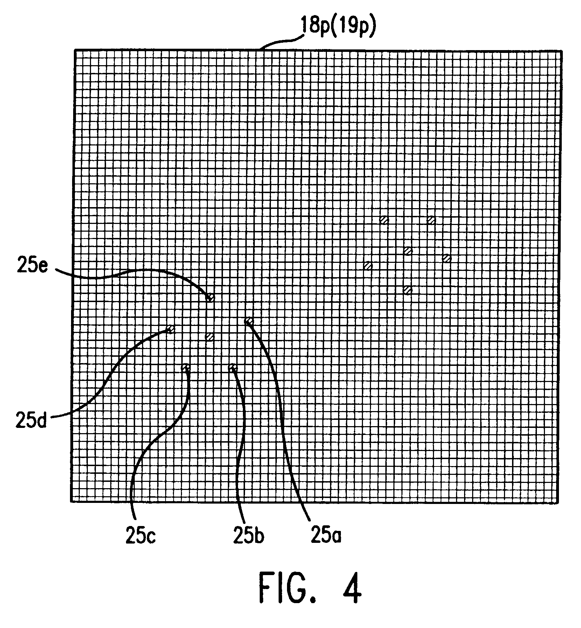

As shown in the drawings the system 3' includes camera housing unit 4', computer 5', acoustical sensor 6' and teed golf ball 8'. Camera unit 4' includes housing frame 11' and support feet 12a', 12b' engageable with tracks 14', and 16' so that unit 4' can be adjusted relative to teed ball 8'. Camera unit 4' further includes an electro-optical camera 18', which camera has a light-receiving aperture 18a', shutter (not shown) and a light sensitive silicon panel 18p', as shown in Figure 4. A CCD camera is preferred but TV-type cameras are also useful. Camera 18' in this one-camera system preferably has higher resolution (754 x 244 pixel CCD array).

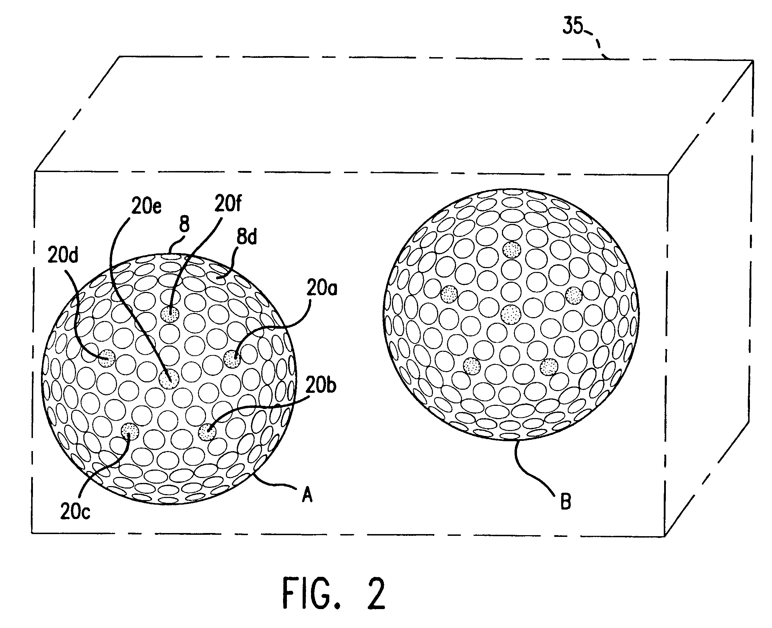

Turning now to Figure 2, golf ball 8 has dimples 8d and six (6) reflective spaced-apart round areas or dots 20a-f. Round dots 20 a-f having diameters of one-tenth (1/10) to one-eighth (1/8) of an inch (2.54 to 3.175 mm) preferred but other size and shaped areas can be used. Dots 20 a-f are preferably made of reflective material which is adhered to the ball surface. The "Scotchlite" brand beaded material made by Minnesota Mining and Manufacturing (3M) is preferred. Corner-reflective retroflectors may also be used. Alternatively, painted spots can be used that define contrasting areas. The number of dots or areas may be as few as three (3) but may number up to six (6) or more, provided that each dot or area reflects light in ball position A and B capable of being receivable by camera 18. Camera 18 is capable of receiving light from each and every dot 20 a-f and camera 19 is likewise capable of receiving light from each and every dot 20 a-f.

Reflective materials as compared with the coated surface of a golf ball are as high as nine hundred (900) times brighter where the divergence angle between the beam of light striking the dots 20 a-f and the beam of light from the dots 20 a-f to the camera aperture is zero or close to zero. As the divergence angle increases the ratio of brightness of the dots a-f to the background (remaining ball surface) decreases. It will be appreciated that infra red lighting may be used to make the flash light invisible to the golfer.

Adjacent to the camera 18' are two flash lamps 21', 22'. Lamps 21' and 22' are placed as close to the operative of camera 18' as possible to minimize the divergence angle and this increases the ability of camera 18' to receive light from ball dots a-f and distinguish that light from light received from other portions of the ball surface and other background light.

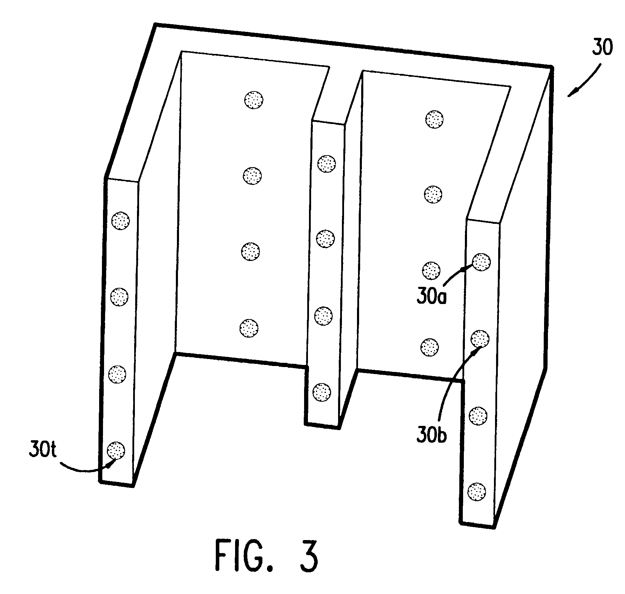

In the operation of this one camera system, the initial step is calibration of the camera 18'. The camera 18' is calibrated to a coordinate system fixed in space. To accomplish this calibration, fixture 30 of Figure 3 is physically located just ahead of where teed ball 8' will be placed. The fixture includes twenty (20) retro-dots 30 a-t of 1/4'' (6.35 mm) in diameter. Fixture 30 defines the global coordinate system by its three dimensional structure. The location of fixture 30 and spacing of camera 18' from the fixture 30 or each other need not be precise since the fixture 30 located these when it determines the eleven constants for camera 18'. The eleven constants determine the focal length, orientation and position of camera 18' given the premeasured points on fixture 30 and twenty U and V coordinates digitized on the camera sensor panel 18p' (Figure 4).

Sensor panel 18p which receives a light pattern contains 240 lines of data and 510 pixels per line. The grid of Figure 4 is merely illustrative in that it does not have 240 lines. A computer algorithm is used for centroid detection of each dot 20 a-f. Centroid detection of a dot is the location of the centre area of the dot for greater accuracy and resolution. Each image received from dots 20 a-f results in an apparent x and y centre position of each dot a-f. Where light is low in the field of vision due to gating, an image intensifier may be used in conjunction with the sensor panels. An image intensifier is a device which produces an output image brighter than the input image.

The X, Y and Z coordinates of each dot a-f were premeasured to an accuracy of one of one-ten thousandth of an inch on a digitizing table and stored in the computer. An image of the calibration fixture 30 is taken by camera 18'.

This image determines the eleven (11) constants relating image space coordinates U and V to the known twenty X, Y and Z positions on the calibration fixture 30.

The equations relating to the calibrated X(i), Y(i), Z(i) spaced points with the $U_i$, $V_i$ image points are:

$$U_i = \frac{D_1 X(i) + D_2 Y(i) + D_3 Z(i) + D_4}{D_9 X(i) + D_{10} Y(i) + D_{11} Z(i) + 1}$$

$$i = 1,20$$

$$V_i = \frac{D_5 X(i) + D_6 Y(i) + D_7 Z(i) + D_8}{D_9 X(i) + D_{10} Y(i) + D_{11} Z(i) + 1}$$

The eleven constants, $D_i$ (i = 1,11) for camera 18' are solved from knowing X(i), Y(i), Z(i) at the 20 locations and the 20 $U_i$, $V_i$ coordinates measured in the calibration picture. A typical fit of the U,V coordinates to the measured U,V coordinates is given in Table I. A pixel accuracy of .1 pixel is usually obtained.

With calibration completed, ball 8' which has been positioned about 25 inches (635 mm) from camera 18' is struck and launched through three-dimensional field of view 35 (Figure 2). Upon launch, the noise of striking is picked up by an acoustical sensor 6' which transmits a signal to open the shutter of camera 18' to light from the six (6) ball dots. One hundred microseconds later, flash light 22', fires a flash of light which illuminates the six (6) ball dots. Eight hundred (800) micro seconds later flash light 21' fires a flash of light to illuminate the six (6) ball dots which are about 3 to 5 inches (76.2 to 127 mm) along the initial flight path in field 35. Flashes of light are between one-ten thousandth and a few millionths of a second in duration. Very small apertures are used in camera 18' to reduce ambient light and enhance strobe light. As light reflects off dots 20 a-f in their two positions it reaches sensor panel 18p in corresponding panel areas 25 a-f. The same type of sensor panel as shown in Figure 4 is used in the one camera system.

Using the known ball 8' dimensions, the known time between camera operations and the known calibration equations of the camera, the external computing circuits are able to calculate the X, Y and Z positions of each enhanced spot in a common coordinate system at the time of each snapshot. From the position information and the known data the external computing circuits are able to calculate the ball velocity and spin in three dimensions during the immediate post-launch time period. Given the initial velocity and spin, plus known aerodynamic characteristics of the ball 8'. the external computing circuits are capable of accurately predicting the flight path and point of landing of the ball.

Three dimensional monitoring of ball 8' that has a radius of .84 inches (21.3 mm) is accomplished by representing the X, Y, Z position of each dot on ball 8' by its centre of mass location TX, TY, TZ and its orientation matrix with angles A, E, T. The position of each dot (i-1, 2, ....6) is given by the matrix coordinate transformation

$$\begin{bmatrix} X(i) \\ Y(i) \\ Z(i) \end{bmatrix} = \begin{bmatrix} TX \\ TY \\ TZ \end{bmatrix} + [M(A,E,T)] \begin{bmatrix} .84 \sin \Theta(i) \cos \phi(i) \\ .84 \sin \Theta(i) \cos \phi(i) \\ .84 \sin \Theta(i) \end{bmatrix}$$

in which $\theta(i)$, $\theta(i)$ are the spherical polar coordinate position of the dots 20 a-f on the surface of ball 8' and

$$M(A,E,T) = \begin{bmatrix} M_{11} & M_{12} & M_{13} \\ M_{21} & M_{22} & M_{23} \\ M_{31} & M_{32} & M_{33} \end{bmatrix} \text{ is the orientation matrix.}$$

The orientation matrix, M, gives the three dimensional orientation transformation connecting the body coordinates of ball 8' with the fix global reference coordinate system calibrated earlier. The column vector ( $.84 \sin \theta(i) \cos \text{ø}(i)$, $.84 \sin \theta(i) \sin \text{ø}(i)$, $.84 \cos \theta(i)$ ), gives the position of a dot labeled i in the body fixed coordinate system. The optimum arrangement of dots 20 a-f is one pole dot at $0°,0°$ and the five surrounding dots are at $\theta(i)=37°$ and $\text{ø}(i)=0°$, $72°$, $144°$, $216°$, $288°$. An angle of theta much greater than $50°$ will not allow all six dots on the ball in the optimum configuration of the system to be captured on severely hooked or sliced golf shots.

The resulting equations to be solved given the camera coordinates, $U_i$, $V_i$, for the six dots, i, are as follows:

$$U_i = \frac{D_1 X(i) + D_2 Y(i) + D_3 Z(i) + D_4}{D_9 X(i) + D_{10} Y(i) + D_{11} Z(i) + 1}$$

i-1,6

$$V_i = \frac{D_5 X(i) + D_6 Y(i) + D_7 Z(i) + D_8}{D_9 X(i) + D_{10} Y(i) + D_{11} Z(i) + 1}$$

The resulting twelve equations are solved for TX, TY, TZ and orientation angles A, E, T for the ball's first location. A similar set of twelve equations are solved for in the second location position of the ball. The twelve equations are nonlinear and are solved iteratively linearizing by using Taylor's theorem. Generally, the equations converge to a solution for the six unknown parameters in eight iterations.

The velocity components of the ball along the three axis of the coordinate system are then computed from the formulas;

$$V_x = \frac{T_x(t+\triangle T) - T_x(t)}{\triangle T}$$

$$V_y = \frac{T_y(t+\triangle T) - T_y(t)}{\triangle T}$$

$$V_z = \frac{T_z(t+\triangle T) - T_z(t)}{\triangle T}$$

in which $\triangle T$ is the time interval between strobe firings.

The spin components result from multiplying the orientational matrix M(A,E,T,t) and M(A',E',T',t+$\triangle$T) and equating the off diagonal elements of the resulting relative orientation matrix.

$$A(t,t+\triangle T) = M(t+\triangle T)M^T(t)$$

Then the magnitude, θ, of the angle of rotation vector of the two balls during the time increment $\triangle T$ is given by:

$$\Theta = \sin^{-1}(R/2)$$

where

$$R = \sqrt{L^2 + M^2 + N^2}$$

$$L = A_{23} - A_{32}$$

$$M = A_{31} - A_{13}$$

$$N = A_{12} - A_{21}$$

The three orthogonal components of spin rate, Wx, Wy, Wz, are given by :

$$W_x = \sin^{-1}(R/2)L/(R\triangle T) = \Theta L/(R\triangle T)$$

$$W_y = \sin^{-1}(R/2)M/(R\triangle T) = \Theta M/(R\triangle T)$$

$$W_z = \sin^{-1}(R/2)N/(R\triangle T) = \Theta N/(R\triangle T)$$

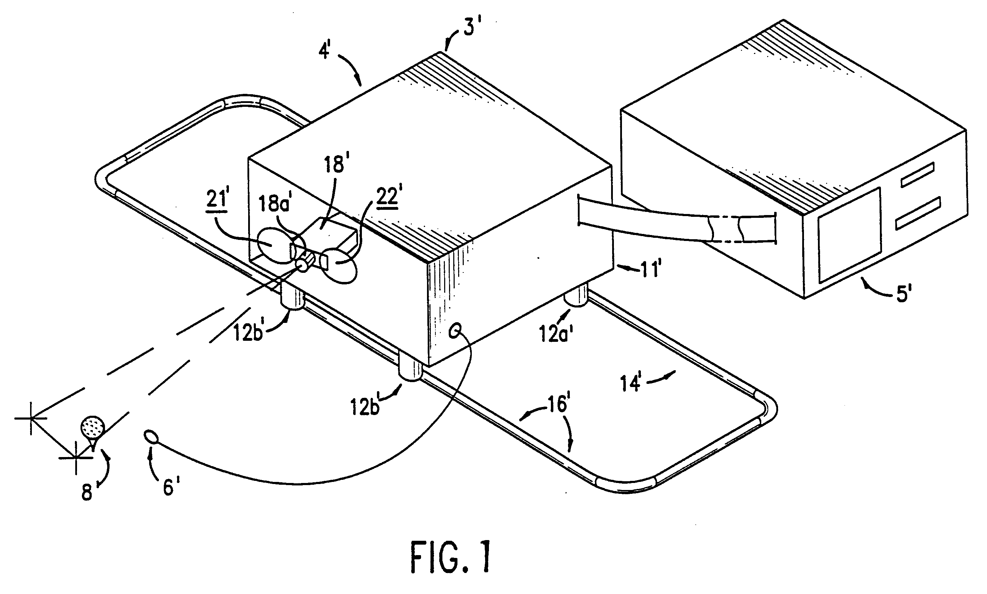

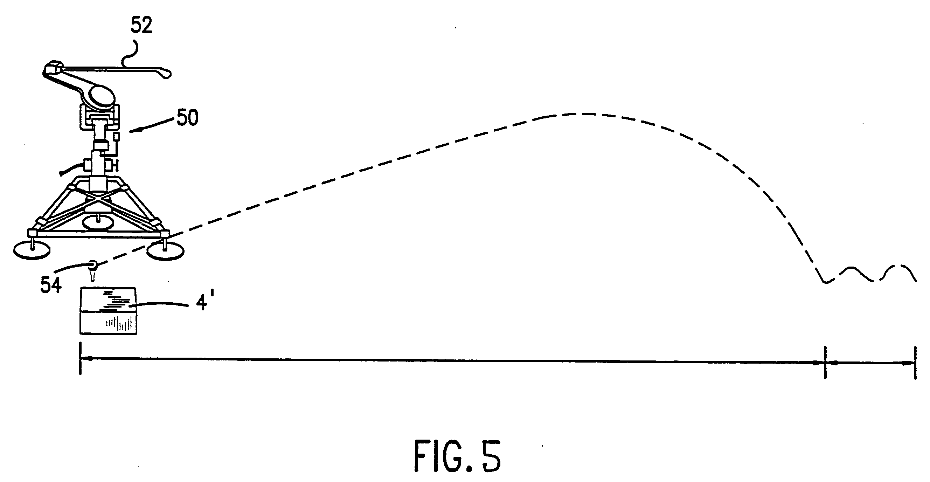

Turning again to figure 5 to the method of accomplishing a test of the current camera system is depicted. An adjustable mechanical golf ball driving unit 50 is used with a gold club 52 for striking a golf ball 54 with retroreflective dots. A unit 4' (Figure 1) is used for determining the launch conditions. The mechanical driving unit 50, suitably the mechanical golfer available from True Temper Corporation, is adjusted to give the launch angle, spin velocity and initial velocity desired for the particular test.

By adjusting the pressure of the machine to 92 psi and using a 4-iron, launch date was generated and analysed for repeatability with unit 4'. Three golf balls were marked with circular retroreflective material at 5 positions of 37° from a centre marking as shown in Figure 2. The three balls were hit twice and generated the data shown in Table I. The three components of velocity were transformed to velocity magnitude, and two angles defined as follows:

TABLE I

| FITTED VALUE U | V | U -DIFFERENCE | V -DIFFERENCE | MEASURED VALUE U | V |
|---|---|---|---|---|---|
| 96.55 | 74.54 | -0.05 | -0.03 | 96.50 | 74.51 |
| 225.59 | 89.15 | 0.01 | 0.01 | 225.60 | 89.16 |
| 338.89 | 81.81 | 0.03 | -0.11 | 338.92 | 81.70 |
| 440.99 | 88.37 | -0.15 | 0.16 | 440.84 | 88.53 |
| 586.06 | 72.99 | 0.01 | 0.07 | 586.07 | 73.06 |
| 97.42 | 126.57 | -0.09 | 0.03 | 97.33 | 126.60 |
| 226.64 | 134.78 | 0.14 | 0.04 | 226.78 | 134.82 |
| 340.16 | 130.69 | 0.03 | -0.17 | 340.19 | 130.52 |
| 442.48 | 134.10 | 0.09 | -0.04 | 442.57 | 134.06 |
| 587.94 | 124.86 | 0.09 | -0.08 | 588.03 | 124.78 |
| 97.81 | 179.04 | 0.19 | 0.10 | 98.00 | 179.14 |
| 227.26 | 180.76 | -0.10 | 0.01 | 227.16 | 180.77 |
| 341.19 | 179.62 | -0.03 | -0.12 | 341.16 | 179.50 |

TABLE I (continued)

| FITTED VALUE U | V | U -DIFFERENCE | V -DIFFERENCE | MEASURED VALUE U | V |
|---|---|---|---|---|---|
| 443.09 | 180.08 | -0.06 | 0.01 | 443.03 | 180.09 |
| 589.01 | 177.07 | -0.06 | 0.10 | 588.95 | 177.17 |
| 98.43 | 231.63 | -0.02 | -0.01 | 98.41 | 231.62 |
| 227.76 | 226.83 | -0.06 | 0.02 | 227.70 | 226.85 |
| 342.05 | 228.69 | -0.10 | 0.05 | 341.95 | 228.14 |
| 443.91 | 226.14 | 0.17 | -0.05 | 444.08 | 226.09 |
| 590.73 | 229.46 | -0.05 | 0.00 | 590.68 | 229.46 |
| AVERAGE STANDARD DEVIATION | | 0.10 | 0.08 | | |

The U and V values are the actual pixel values measured on the CCD array. The U coordinate may have a value of 1 to 754 and the V coordinate a value of 1 to 244. V and V are the pixel location on the sensor or sensors 18p, 19p.

$$Ball\ Velocity = \sqrt{(V_x^2 + V_y^2 + V_z^2)}$$

$$Launch\ \angle = \tan^{-1}\left(\frac{Vy}{V_z}\right)$$

$$Side\angle = \tan^{-1}\left(\frac{Vx}{V_z}\right)$$

As shown in Table II, the variation in side angle is the most pronounced, percentage wise, relative to the other measured parameters.

TABLE II

| Shot #1 | Ball Velocity | Launch Angle | Side Angle | $W_x$ | $W_y$ | $W_z$ |
|---|---|---|---|---|---|---|
| 1 | 122.5 | 15.9 | -2.1 | -4900 | 531 | -10 |
| 2 | 123.3 | 16.0 | 0.0 | -4666 | 193 | 64 |
| 3 | 123.2 | 15.5 | -1.4 | -4792 | 343 | 112 |
| 4 | 122.7 | 15.7 | -1.4 | -4884 | 282 | 58 |
| 5 | 122.9 | 15.9 | -0.1 | -4592 | 285 | 53 |
| 6 | 122.9 | 15.4 | -1.4 | -4707 | 348 | 22 |
| Average | 122.9 | 15.7 | -1.1 | -4757 | 330 | 50 |
| STD | 0.3 | 0.2 | 0.8 | 123 | 113 | 41 |

In Table III, the clubface was rotated to hit sliced shots and the six shots were repeated.

TABLE III

| Shot #1 | Ball Velocity | Launch Angle | Side Angle | $W_x$ | $W_y$ | $W_z$ |
|---|---|---|---|---|---|---|
| 1 | 116.7 | 20.9 | 4.5 | -4963 | -1159 | -21 |

TABLE III (continued)

| Shot #1 | Ball Velocity | Launch Angle | Side Angle | $W_x$ | $W_y$ | $W_z$ |
|---|---|---|---|---|---|---|
| 2 | 118.2 | 19.9 | 6.6 | -5370 | -1537 | 59 |
| 3 | 118.7 | 19.3 | 7.8 | -5903 | -1561 | 27 |
| 4 | 116.3 | 19.7 | 9.5 | -5621 | -1531 | 56 |
| 5 | 118.0 | 19.7 | 7.6 | -5668 | -1549 | 32 |
| 6 | 118.5 | 19.5 | 8.6 | -5640 | -1498 | -13 |
| Average | 117.7 | 19.0 | 7.4 | -5528 | -1473 | 23 |
| STD | 1.0 | 0.6 | 1.7 | 324 | 155 | 34 |

Finally, in Table IV, the clubface was positioned to hit hook shots and again similar results for variation in the six parameters were obtained.

TABLE IV

| Shot #1 | Ball Velocity | Launch Angle | Side Angle | $W_x$ | $W_y$ | $W_z$ |
|---|---|---|---|---|---|---|
| 1 | 123.9 | 13.0 | -5.7 | -3881 | 1860 | -51 |
| 2 | 124.9 | 13.4 | -4.0 | -3615 | 1320 | -16 |
| 3 | 125.3 | 12.9 | -4.9 | -3719 | 1429 | 23 |
| 4 | 124.2 | 13.1 | -5.4 | -3856 | 1566 | 35 |
| 5 | 124.8 | 13.3 | -4.2 | -3629 | 1349 | -68 |
| 6 | 124.5 | 13.0 | -3.8 | -3746 | 1523 | 19 |
| Average | 124.6 | 13.1 | -4.7 | -3741 | 1508 | -10 |
| STD | 0.5 | 0.2 | 0.8 | 111 | 197 | 43 |

Wx, Wy and Wz values are the three orthogonal components of ball spin rate. The spin components Wx, Wy and Wz, are measured in RPMs (revolutions per minute).

In summary, a one camera system can adequately calculate the speed and spin of a golf ball and be used as a useful practice aid and data-gathering apparatus for equipment design.

Other objects such as golf clubheads, baseballs, footballs, soccerballs, hockey pucks etc. may also be monitored using the system described.

**Claims**

1. Apparatus for monitoring the initial portion of the flight of an object (8') provided with a plurality of illuminable areas (20 a-f) and which includes a portable housing (4')

   characterized by

   (a) a single camera means (18') located in fixed relationship in said housing (4') and having a light sensitive panel (18p') focused on a field of view (35) through which the object (8') passes during the initial portion of its flight;

   (b) means for admitting light into the camera means (18') at least twice as the object (8') passes through the field of view (35);

   (c) three or more illuminable areas (20 a-f) on the object (8') positioned so that light emitting from such areas reaches the light sensitive panel (18p') to form light patterns (25 a-e) thereon and create analog image signals when the camera light admitting means is actuated; and,

   (d) computer means (5') in or near said portable housing (4) for receiving and processing said analog image signals to determine the path of the object (8'), its speed and launch angle during the initial portion of flight.

2. Apparatus as claimed in claim 1 characterized in that said camera light admitting means includes a flash means (21',22') which emits light in two flashes onto the object (8').

3. Apparatus as claimed in claim 1 characterised in that

(a) said camera means is provided by a single electro-video unit (18') having a shutter focused on the object (8') in the field of view (35);

(b) calibration means (30) for calibrating the illuminable areas (20 a-f) of the object (8');

(c) measuring means in the electro-video unit (18') which recognize the position of calibrated illuminable areas (20 a-f) in the field (35);

(d) a plurality of flashing lights (21',22,) for lighting the field;

(e) control means for opening and closing the shutter and energizing each light (21',22') such that each light illuminates the object in the field when the object is at a first position (A) and when it is at a second position (B);

(f) light receiving means (18p') in the electro-video unit for receiving light from the illuminable areas (20 a-f) when the object is at the first position (A) and at the second position (B); and

(g) computer means (5') in or near the housing for comparing the calibrated illuminable areas positions at the first position (A) with such illuminable areas at the second position (B).

4. Apparatus as claimed in any one of preceding claims 1 to 3 characterised in that it has six illuminable areas (20 a-f).

5. Apparatus as claimed in any one of claims 1 to 4 characterised in that all the various means, except the computer means (5') and support means for said object (8'), are located in the portable housing (4').

**Patentansprüche**

1. Gerät zum Überwachen des anfänglichen Teils des Flugs eines Objekts (8'), welches mit einer Vielzahl beleuchtbarer Bereiche (20a-f) versehen ist und das ein tragbares Gehäuse (4') umfaßt,
**gekennzeichnet durch**

(a) ein einziges Kameramittel (18'), welches im Gehäuse (4') in fester Relation angeordnet ist und ein lichtempfindliches Paneel (18p') aufweist, das auf ein Blickfeld (35) fokussiert ist, durch welches das Objekt (8') während des anfänglichen Teils seines Flugs hindurchgeht;
(b) Mittel zum mindestens zweifachen Zuführen von Licht in das Kameramittel (18'), wenn das Objekt (8') durch das Blickfeld (35) hindurchgeht;
(c) drei oder mehr beleuchtbare Bereiche (20a-f) auf dem Objekt (8'), die so angeordnet sind, daß Licht, das von solchen Bereichen abgestrahlt wird, das lichtempfindliche Paneel (18p') erreicht zur dortigen Bildung von Lichtmustern (25a-e) und zur Erzeugung analoger Bildsignale, wenn das Kameralichtzuführmittel betätigt wird und
(d) Computermittel (5') in oder nahe dem tragbaren Gehäuse (4) zum Empfang und Verarbeitung der analogen Bildsignale zur Bestimmung der Bahn des Objekts (8'), seiner Geschwindigkeit und des Startwinkels während des anfänglichen Teils des Flugs.

2. Gerät nach Anspruch 1, **dadurch gekennzeichnet**, daß das Kameralichtzuführmittel ein Blitzmittel (21', 22') umfaßt, welches Licht in zwei Blitzen auf das Objekt (8') emitiert.

3. Gerät nach Anspruch 1, **dadurch gekennzeichnet**, daß

(a) dieses Kameramittel durch eine einzige Elektrovideoeinheit (18') gebildet wird, welche einen Verschluß aufweist, der auf das Objekt (8') im Blickfeld (35) fokussiert ist;
(b) Kalibriermittel (30) zum Kalibrieren der beleuchtbaren Bereiche (20a-f) des Objekts (8');

(c) Meßmittel in der Elektrovideoeinheit (18'), welche die Stellung der kalibrierten beleuchtbaren Bereiche (20 a-f) in dem Feld (35) erkennen;

(d) eine Vielzahl von Blitzlichtern (21', 22) zum Beleuchten des Felds;

(e) Steuermittel zum Öffnen und Schließen des Verschlusses und zum Bestromen jedes Lichts (21', 22'), derart, daß jedes Licht das Objekt in dem Feld beleuchtet, wenn das Objekt sich an einer ersten Position (A) und wenn es sich an einer zweiten Position (B) befindet;

(f) Lichtempfangsmittel (18p') in der Elektrovideoeinheit zum Empfang des Lichts von den beleuchtbaren Bereichen (20a-f), wenn das Objekt sich an der ersten Position (A) und an der zweiten Position (B) befindet und

(g) Computermittel (5') in oder nahe dem Gehäuse zum Vergleich der kalibrierten beleuchtbaren Bereichspositionen bei der ersten Position (A) mit solchen beleuchtbaren Bereichen bei der zweiten Position (B).

4.  Gerät nach einem der vorhergehenden Ansprüche 1 bis 3, **dadurch gekennzeichnet**, daß es sechs beleuchtbare Bereiche (20a-f) aufweist.

5.  Gerät nach einem der Ansprüche 1 bis 4, **dadurch gekennzeichnet**, daß alle verschiedenen Mittel mit Ausnahme der Computermittel (5') und der Tragmittel für das Objekt (8') im tragbaren Gehäuse (4') angeordnet sind.

**Revendications**

1.  Appareil pour contrôler la partie initiale du vol d'un objet (8') comportant une pluralité de zones éclairables (20 a-f) et qui comprend un boîtier portatif (4')
    caractérisé par

    (a) un seul moyen formant caméra (18') disposé d'une manière fixe dans ledit boîtier (4') et ayant un panneau photosensible (18p') orienté vers un champ de vision (35) par lequel l'objet (8') passe pendant la partie initiale de son vol;

    (b) un moyen pour laisser entrer de la lumière dans le moyen formant caméra (18') au moins deux fois lorsque l'objet (8') passe par le champ de vision (35);

    (c) trois zones éclairables (20 a-f) ou plus sur l'objet (8'), placées de façon que la lumière émise depuis ces zones atteigne le panneau photosensible (18p') pour former sur celui-ci des motifs lumineux (25 a-e) et créer des signaux analogiques d'images lorsque le moyen pour laisser entrer de la lumière dans la caméra est en marche; et

    (d) un moyen formant ordinateur (5') dans ou près dudit boîtier portatif (4) pour recevoir et traiter lesdits signaux analogiques d'images afin de déterminer la trajectoire de l'objet (8'), sa vitesse et son angle de lancement pendant la partie initiale du vol.

2.  Appareil selon la revendication 1, caractérisé en ce que ledit moyen pour laisser entrer de la lumière dans la caméra comporte un moyen (21', 22') d'émission d'éclairs qui émet de la lumière en deux éclairs vers l'objet (8').

3.  Appareil selon la revendication 1, caractérisé en ce que

    (a) ledit moyen formant caméra est constitué par un seul dispositif électrovidéo (18') ayant un obturateur mis au point sur l'objet (8') présent dans le champ de vision (35);

    (b) un moyen d'étalonnage (30) pour étalonner les zones éclairables (20 a-f) de l'objet (8');

    (c) des moyens de mesure présents dans le dispositif électro-vidéo (18'), qui reconnaissent dans le champ la position des zones étalonnées éclairables (20 a-f);

    (d) une pluralité de lampes-éclairs (21', 22') pour éclairer le champ;

    (e) des moyens de commande pour ouvrir et fermer l'obturateur et mettre chaque lampe (21', 22') sous tension de façon que chaque lampe éclaire l'objet présent dans le champ lorsque l'objet est dans une première position (A) et lorsqu'il est dans une deuxième position (B);

(f) un moyen (18p') de réception de lumière présent dans le dispositif électrovidéo pour recevoir de la lumière des zones éclairables (20 a-f) lorsque l'objet est dans la première position (A) et dans la deuxième position (B); et

(g) un moyen formant ordinateur (5') dans ou près du boîtier pour comparer les positions des zones étalonnées éclairables dans la première position (A) avec celles des zones éclairables dans la deuxième position (B).

4. Appareil selon l'une quelconque des revendications précédentes 1 à 3, caractérisé en ce qu'il a six zones éclairables (20 a-f).

5. Appareil selon l'une quelconque des revendications 1 à 4, caractérisé en ce que tous les divers moyens, sauf le moyen formant ordinateur (5') et le moyen de support pour ledit objet (8'), se trouvent dans le boîtier portatif (4').

FIG. 1

FIG. 2

EP 0 625 716 B1

FIG. 3

EP 0 625 716 B1

FIG. 4

FIG.5

EP 0 625 716 B1